# FASCICULE DE BREVET EUROPEEN

(11) **EP 1 132 635 B1**
(45) Date de publication et mention de la délivrance du brevet: **11.08.2004**
(21) Numéro de dépôt: 01400211.7
(22) Date de dépôt: 26.01.2001
(51) Int. Cl.: F16C 33/38, F16C 33/40

(54) **Cage pour roulement à billes**
Kugellagerkäfig
Ball bearing cage

(30) Priorité: 10.03.2000 FR 0003074
(43) Date de publication de la demande: 12.09.2001
(73) Titulaire: SNR ROULEMENTS, 74010 Annecy Cédex (FR)
(72) Inventeur: Chambert, Olivier, 74960 Cran-Gevrier (FR)
(74) Mandataire: Srour, Elie

(56) Documents cités:
- DE-A- 19 634 483
- FR-A- 2 665 231
- GB-A- 966 128
- US-A- 3 975 066
- US-A- 4 560 291
- US-A- 4 741 632
- US-A- 4 804 276
- US-A- 5 941 704

## Description

L'invention se rapporte à une cage pour roulement à billes, et particulièrement à une cage pour roulement à billes comportant des moyens d'assemblage complémentaires avec une autre cage du même type et des ouvertures d'introduction et de retenue des billes.

La publication FR 2 665 231 décrit une cage en deux parties dans laquelle chaque partie comporte une face avant munie d'alvéoles ouvertes assurant la retenue d'une rangée de billes et une face arrière comportant des moyens destinés à décaler angulairement une partie par rapport à l'autre partie de manière à réduire l'entraxe des billes, une telle cage présentant l'avantage d'avoir un poids et un encombrement réduit.

Toutefois, dans la pratique, une telle cage et ses alvéoles ouvertes doivent présenter une rigidité suffisante pour permettre le montage en automatique des billes dans les alvéoles sans occasionner trop de déformation du corps de la cage. De plus, une bonne rigidité de la cage et des alvéoles est également nécessaire pour assurer le maintien des billes lors du montage de la cage, équipée de ses billes, sur le roulement ou lors du fonctionnement du roulement sous contrainte. Or, la rigidité d'une telle cage et de ses alvéoles est directement liée à l'épaisseur du corps de la cage et des dents de séparation des alvéoles. Il en résulte une épaisseur minimum des dents permettant d'obtenir une bonne rigidité qui limite le volume disponible pour accueillir les billes. Or, le nombre de billes par rangée pour un encombrement donné conditionne directement les performances d'un roulement et en particulier ses capacités à recevoir de fortes charges.

Le but de la présente invention est donc de proposer une cage dont les formes sont optimisées pour recevoir le maximum de billes tout en conservant une rigidité suffisante pour assurer le maintien des billes lors des phases de montage ou de fonctionnement sous contrainte du roulement et qui soit simple, légère et économique à réaliser.

A cet effet, l'invention se rapporte à une cage pour roulement à billes, chaque partie possédant une face avant avec des alvéoles de retenue d'une rangée de billes et une face arrière comportant un corps annulaire présentant des créneaux permettant d'assurer le positionnement relatif avec une autre cage du même type imbriquée dans ladite cage, le fond de chaque créneau se prolongeant en direction de la face avant par des dents de séparation des alvéoles dont les flancs possèdent des portées sphériques orientées vers le centre de l'alvéole adjacente.

Selon l'invention, la cage est caractérisée en ce que la face avant comporte une couronne de fermeture reliant les extrémités périphériques des dents entre elles.

Selon une mode de réalisations de l'invention, les dents sont localement d'épaisseur très réduite au niveau de la hauteur radiale du centre des billes.

Selon une autre mode de l'invention, les dents s'étendent obliquement depuis le corps annulaire de la face arrière, disposée à une hauteur radiale inférieure à la hauteur radiale du centre des billes, jusqu'à la couronne de la face avant, disposée à une hauteur radiale supérieure à la hauteur radiale du centre des billes.

Selon une autre mode de réalisations de l'invention, les dents s'étendent sensiblement à 45° par rapport à l'axe de la cage.

Selon une autre mode de l'invention, la couronne comporte, à la périphérie des billes, une face interne munie de portées sphériques orientées vers le centre des alvéoles adjacentes.

Selon une autre mode de l'invention, la couronne est axialement en retrait par rapport à l'extrémité axiale des billes.

Selon une autre mode de l'invention, la couronne comporte un bord radial intérieur présentant une découpe circulaire en regard de chaque bille, cette découpe correspondant à l'intersection de la portée sphérique de l'alvéole avec le plan de la face avant et permettant le débordement des billes au delà de la face avant.

Selon une autre mode de l'invention, le bord intérieur du corps annulaire de la face arrière comporte des clips de maintien.

L'invention concerne également un roulement à une rangée de billes, caractérisé en ce qu'il comporte une cage répondant au caractéristiques précédemment décrites.

L'invention concerne également un roulement à deux rangées de billes, caractérisé en en ce qu'il comporte deux cages répondant aux caractéristiques précédemment décrites, les créneaux desdites cages étant imbriqués.

D'autres caractéristiques et avantages apparaîtront à la lecture de la description d'un roulement équipé de cages selon l'invention, en référence aux dessins annexés dans lesquels :
- la figure 1 est une vue en coupe partielle d'un roulement à deux rangées de billes à contact oblique contenues dans deux cages conformes à l'invention, imbriquées l'une dans l'autre ;
- la figure 2 est une vue agrandie en perspective d'une cage pour roulement à billes selon l'invention.

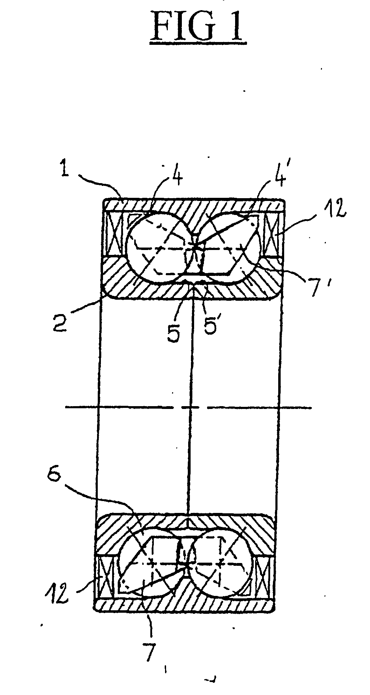

Le roulement représenté à la figure 1 est constitué à titre d'exemple par une bague extérieure 1 et une bague intérieure 2 en deux parties. Les bagues 1 et 2 possèdent respectivement des chemins de roulement intérieurs 4,4' et extérieurs 5,5' pour des corps roulants 6 à contact oblique regroupés en deux rangées de billes.

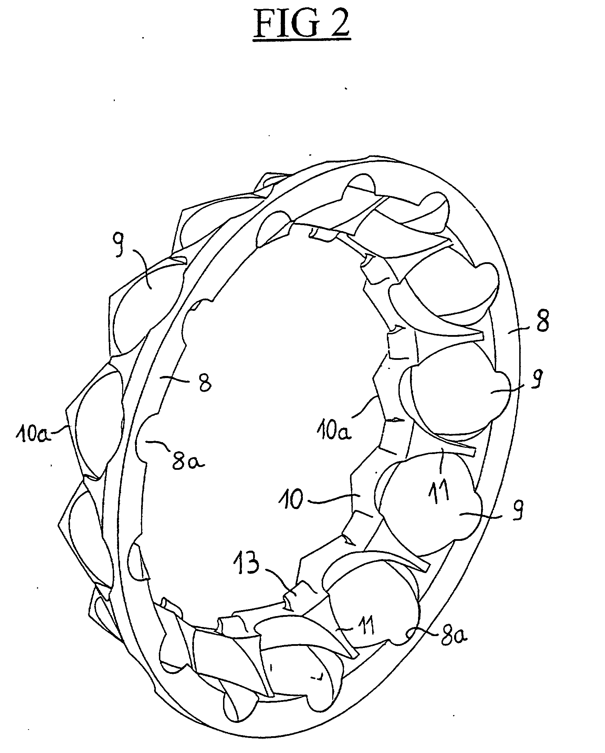

Les billes 6 sont contenues dans deux cages identiques 7,7' selon l'invention dont l'une est montrée plus en détail à la figure 2.

La cage 7 possède une face arrière comportant un corps 10 annulaire pourvu de créneaux 10a angulaires destinés à venir s'engager dans les créneaux angulaires de l'autre cage 7' afin de réaliser un décalage angulaire des deux cages 7 et 7'. Avantageusement, la face intérieure du corps 10 annulaire comporte des clips de maintien 13 destinés à assurer la retenue axiale des deux cages 7 et 7' de la bague intérieure 2 et ainsi créer un roulement dont les éléments, solidaires, facilitent la manutention.

Le corps annulaire 10 se prolonge en direction de la face avant par des segments de séparation formés par des dents 11 partant du fond de chaque créneau 10a et s'étendant obliquement, selon un angle sensiblement égal à 45° par rapport à l'axe de la cage. Chaque flan latéral des dents 1 possède une portée sphérique coopérant avec la portée sphérique des dents 11 voisines pour former des alvéoles 9 de retenue des billes 6.

Les dents 11 présentent une extrémité évasée accompagnant le contour de la portée sphérique et sont reliées entre elles, au niveau de la face avant, par une couronne 8 venant fermer les alvéoles 9 à la périphérie des billes 6, à une hauteur radiale légèrement supérieure à la hauteur radiale du centre des billes 6.

Conformément à la figure 2, les dents 11 sont amincies localement pour réaliser une paroi de séparation d'épaisseur minimale au niveau de la hauteur radiale du centre des billes 6, la rigidité latérale des dents 11 étant assurée par le rattachement périphérique des dents 11 à la couronne 8. La paroi interne de la couronne 8 comporte en regard de chaque bille 6 une portée sphérique orientée vers le centre de l'alvéole 9 assurant le prolongement des portées sphériques des dents 11, l'intersection de la portée sphérique avec la face avant étant matérialisée par une découpe 8a circulaire permettant le débordement de la surface de la bille 6 au travers de la face avant.

Le montage des billes 6 dans les alvéoles 9 s'effectue latéralement par la face radiale extérieure de la cage 7 par déformation élastique des alvéoles 9. Une fois les billes 6 montées, les cages 7 et 7' sont montées sur les bagues intérieures puis assemblées dos à dos de façon à former deux rangées de billes partiellement imbriquées, à titre d'exemple, dans le roulement assemblé. Dans un autre exemple de réalisation d'une cage pour roulement à billes selon l'invention, où la largeur de l'entraxe des billes 6 est moins contraignante, lesdites billes ne seront pas imbriquées.

La couronne 8 étant en retrait par rapport au débordement axial des billes 6, l'encombrement axial de la cage 7 n'est pas augmenté par la présence de la couronne 8 et permet donc l'utilisation de dispositifs d'étanchéité 12 de type standard tel que représenté, à titre d'exemple, sur la figure 1.

Une telle cage autorise la réduction supplémentaire de l'épaisseur des dents de séparation des billes et permet ainsi d'augmenter le nombre de billes portées par une cage d'un diamètre donné et donc d'augmenter les performances du roulement et en particulier la charge maximale que ce dernier peut supporter, pour un encombrement donné. La cage selon l'invention permet aussi de diminuer le poids et l'encombrement des dispositifs de roulement pouvant supporter une charge donnée.

## Revendications

1. Cage (7) pour roulement à billes (6), possédant une face avant avec des alvéoles (9) de retenue d'une rangées de billes (6) et une face arrière comportant un corps annulaire (10) présentant des créneaux (10a) permettant d'assurer le positionnement relatif avec une seconde cage (7') de même type imbriquée dans la cage (7), le fond de chaque créneau (10a) se prolongeant en direction de la face avant par des dents (11) de séparation des alvéoles (9) dont les flancs possèdent des portées sphériques orientées vers le centre de l'alvéole (9) adjacente, **caractérisée en ce que** ladite face avant comporte une couronne de fermeture (8) reliant les extrémités périphériques des dents (11) entre elles, ladite couronne (8) étant axialement en retrait par rapport à l'extrémité axiale des billes (6).

2. Cage selon la revendication précédente, **caractérisée en ce que** lesdites dents (11) sont localement d'épaisseur très réduite au niveau de la hauteur radiale du centre des billes (6).

3. Cage selon l'une quelconques des revendications précédentes, **caractérisée en ce que** lesdites dents (11) s'étendent obliquement depuis le corps annulaire (5) de la face arrière, disposée à une hauteur radiale inférieure à la hauteur radiale du centre des billes (6), jusqu'à la couronne (8) de la face avant, disposée à une hauteur radiale supérieure à la hauteur radiale du centre des billes (6).

4. Cage selon la revendication précédente, **caractérisée en ce que** lesdites dents (11) s'étendent sensiblement à 45° par rapport à l'axe de la cage (7,7').

5. Cage selon l'une quelconques des revendications précédentes, **caractérisée en ce que** ladite couronne (8) comporte, à la périphérie des billes (6), une face interne munie de portées sphériques orientées vers le centre des alvéoles (9) adjacentes.

6. Cage selon l'une quelconques des revendications précédentes, **caractérisée en ce que** ladite couronne (8) comporte un bord radial intérieur présentant une découpe circulaire (8a) en regard de chaque bille (6) correspondant à l'intersection de la portée sphérique de l'alvéole (9) avec le plan de la face avant, lesdites découpes (8a) permettant le débordement des billes (6) au delà de la face avant.

7. Cage selon l'une quelconques des revendications précédentes, **caractérisée en ce que** le bord intérieur du corps annulaire (10) de la face arrière comporte des clips de maintien (13).

8. Roulement à une rangée de billes (6), **caractérisé en ce qu'**il comporte une cage (7 ,7') selon l'une quelconque des revendications précédentes.

9. Roulement à deux rangées de billes (6), **caractérisé en ce qu'**il comporte deux cages (7 ,7') selon l'une quelconque des revendications précédentes, les créneaux (10a) desdites cages (7,7') étant imbriqués.

## Patentansprüche

1. Käfig (7) für Kugellager (6), welcher eine vordere Fläche mit Haltezellen (9) einer Reihe von Kugeln (6) aufweist und eine hintere Fläche, welche einen ringförmigen Körper (10) aufweist, welcher Zinnen (10a) aufweist, welche die relative Positionierung zu einem zweiten Käfig (7') vom gleichen Typ, der in den Käfig (7) verzahnt ist, ermöglichen, wobei der Boden jeder Zinne (10a) in Richtung der vorderen Wand durch Zähne (11) zur Trennung der Zellen (9) verlängert ist, deren Seitenflächen kugelförmige Lagerflächen aufweisen, die in Richtung zum Zentrum der benachbarten Zelle (9) ausgerichtet sind, **dadurch gekennzeichnet, dass** die vordere Fläche einen Schließkranz (8) aufweist, welcher die peripheren Enden der Zähne (11) untereinander verbindet, wobei der Kranz (8) axial im Verhältnis zum axialen Ende der Kugeln (6) in Rücksprung ist.

2. Käfig gemäß dem vorhergehenden Anspruch, **dadurch gekennzeichnet, dass** die Zähne (11) lokal von einer stark reduzierten Dicke auf Höhe der radialen Höhe des Zentrums der Kugeln (6) sind.

3. Käfig gemäß irgendeinem der vorhergehenden Ansprüche, **dadurch gekennzeichnet, dass** die Zähne (11) sich schräg ausgehend vom ringförmigen Körper (5) der hinteren Fläche erstrecken, welche auf einer niedrigeren radialen Höhe als der radialen Höhe des Zentrums der Kugeln (6) angeordnet ist, bis zum Kranz (8) der vorderen Fläche, welche auf einer höheren radialen Höhe als der radialen Höhe des Zentrums der Kugeln (6) angeordnet ist.

4. Käfig gemäß dem vorhergehenden Anspruch, **dadurch gekennzeichnet, dass** die Zähne (11) sich im Wesentlichen bei 45° im Verhältnis zur Achse des Käfigs (7, 7') erstrecken.

5. Käfig gemäß irgendeinem der vorhergehenden Ansprüche, **dadurch gekennzeichnet, dass** der Kranz (8) an der Peripherie der Kugeln (6) eine innere Fläche aufweist, die mit kugelförmigen Lagerflächen ausgestattet ist, welche in Richtung zum Zentrum der benachbarten Zellen (9) ausgerichtet ist.

6. Käfig gemäß irgendeinem der vorhergehenden Ansprüche, **dadurch gekennzeichnet, dass** der Kranz (8) einen radialen unteren Rand aufweist, welcher einen kreisförmigen Ausschnitt (8a) gegenüberliegend von jeder Kugel (6) aufweist, entsprechend der Schnittstelle der kugelförmigen Lagerfläche der Zelle (9) mit der Ebene der vorderen Fläche, wobei die Ausschnitte (8a) das Vorstehen der Kugeln (6) über die vordere Fläche hinaus ermöglichen.

7. Käfig gemäß irgendeinem der vorhergehenden Ansprüche, **dadurch gekennzeichnet, dass** der untere Rand des ringförmigen Körpers (10) der hinteren Fläche Halteklipps (13) aufweist.

8. Lager mit einer Reihe von Kugeln (6), **dadurch gekennzeichnet, dass** es einen Käfig (7, 7') gemäß irgendeinem der vorhergehenden Ansprüche aufweist.

9. Lager mit zwei Reihen von Kugeln (6), **dadurch gekennzeichnet, dass** es zwei Käfige (7, 7') gemäß irgendeinem der vorhergehenden Ansprüche aufweist, wobei die Zinnen (10a) der Käfige miteinander verzahnt sind.

## Claims

1. A cage (7) for a ball bearing (6) comprising a front surface with retaining cells (9) for a row of balls (6) and a rear surface comprising an annular body (10) having pinnacles (10a) making it possible to ensure relative positioning with a second cage (7') of the same type overlapping with the cage (7), the base of each pinnacle (10a) being prolonged in the direction of the front surface by teeth (11) separating the cells (9) whose flanks comprise spherical bearings oriented towards the centre of the adjacent cell (9), **characterised in that** the front surface comprises a closure crown (8) connecting the peripheral ends of the teeth (11) together, the crown (8) being axially retracted with respect to the axial end of the balls (6).

2. A cage as claimed in the preceding claim, **characterised in that** the teeth (11) are locally of a very small thickness at the location of the radial height of the centre of the balls (6).

3. A cage as claimed in any one of the preceding claims, **characterised in that** the teeth (11) extend obliquely from the annular body (5) of the rear surface disposed at a radial height smaller than the radial height of the centre of the balls (6) up to the crown (8) of the front surface disposed at a radial height greater than the radial height of the centre of the balls (6).

4. A cage as claimed in the preceding claim, **characterised in that** the teeth (11) extend substantially at 45° with respect to the axis of the cage (7, 7').

5. A cage as claimed in any one of the preceding claims, **characterised in that** the crown (8) comprises, at the periphery of the balls (6), an inner surface provided with spherical bearings oriented towards the centre of the adjacent cells (9).

6. A cage as claimed in any one of the preceding claims, **characterised in that** the crown (8) comprises an inner radial edge having a circular cut-out (8a) facing each ball (6) corresponding to the intersection of the spherical bearing of the cell (9) with the plane of the front surface, these cut-outs (8a) enabling the balls (6) to project above the front surface.

7. A cage as claimed in any one of the preceding claims, **characterised in that** the inner edge of the annular body (10) of the rear surface comprises retaining clips (13).

8. A bearing with a row of balls (6), **characterised in that** it comprises a cage (7, 7') as claimed in any one of the preceding claims.

9. A bearing with two rows of balls (6), **characterised in that** comprises two cages (7, 7') as claimed in any one of the preceding claims, the pinnacles (10a) of the cages (7, 7') being overlapping.
